# EUROPÄISCHE PATENTSCHRIFT

(11) **EP 2 340 236 B1**
(45) Veröffentlichungstag und Bekanntmachung des Hinweises auf die Patenterteilung: **21.08.2013**
(21) Anmeldenummer: 09744115.8
(22) Anmeldetag: 19.10.2009
(51) Int. Cl.: C04B 7/43, C04B 7/36, F27B 7/20

(54) **VERFAHREN UND ANLAGE ZUR HERSTELLUNG VON ZEMENTKLINKER**
DEVICE AND SYSTEM FOR PRODUCING CEMENT CLINKER
PROCÉDÉ ET INSTALLATION DE FABRICATION D'UN CLINKER DE CIMENT

(30) Priorität: 24.10.2008 DE 102008053135
(43) Veröffentlichungstag der Anmeldung: 06.07.2011
(73) Patentinhaber: ThyssenKrupp Resource Technologies GmbH, 59269 Beckum (DE)
(72) Erfinder: KUPPER, Detlev, 48291 Telgte (DE)
(74) Vertreter: Tetzner, Michael
(86) Internationale Anmeldenummer: PCT/EP2009/063676
(87) Internationale Veröffentlichungsnummer: WO 2010/046345

(56) Entgegenhaltungen:
- EP-A- 0 059 508
- EP-A- 0 059 509
- WO-A-2008/056068
- WO-A-2008/059378
- DE-A1- 19 637 320

## Beschreibung

Die Erfindung betrifft ein Verfahren und eine Anlage zur Herstellung von Zementklinker, wobei Rohmehl vorgewärmt, calciniert und anschließend in einem Ofen zu Zementklinker gebrannt wird.

Bei der Herstellung von Zementklinker entstehen ca. 0,53 t CO₂/t Klinker aus der Entsäuerung des Kalksteins und ca. 0,28 t CO2/t Klinker aus der Brennstoffverbrennung im Brennprozess. Diese Kohlendioxidmengen (0,81 t CO₂/t Klinker) werden bisher über das Abgas in die Atmosphäre emittiert, wenngleich die Wirkung des Kohlendioxids als Treibhausgas allgemein bekannt ist. Es wird daher angestrebt, die Emissionen zukünftig drastisch zu reduzieren.

Vor diesem Hintergrund werden derzeit Verfahren diskutiert, die eine Abscheidung von CO₂ aus den Abgasen von Verbrennungsprozessen ermöglichen.

Aus der DE 196 37 320 A1 ist ein Verfahren zur Herstellung von Zement bekannt, bei dem das Rohmehl vorgewärmt, kalziniert und schließlich in einem Drehrohrofen gebrannt wird. Das Rohmehl wird dabei in einem Calcinator entsäuert, der mit Ofenabgas durchströmt wird. Der Calcinator arbeitet im Flugstromprinzip. Das calcinierte Rohmehl wird vor der Aufgabe in den Drehrohrofen einem Suspensionsreaktor mit zirkulierender Wirbelschicht zugeführt. Diese Wirbelschicht wird mit erwärmter Luft gebildet, in der das calcinierte Material auf Temperaturen von 1000 bis 1200°C erwärmt wird, sodass Verunreinigungen ausgetrieben werden.

Weiterhin sind aus der EP 0 059 508 A1 und der EP 0 059 509 A1 Anlagen zur Herstellung von Zementklinker bekannt, die einen als Wirbelschichtreaktor ausgebildeten Calcinator aufweisen, wobei die Abgasen eines Ofens unter Umgehung des Calcinators einem Vorwärmer zugeleitet werden.

Für die Minderung von CO₂-Emissionen ist insbesondere das sogenannte Oxyfuel-Verfahren für die Zementherstellung von Interesse, bei dem der Brennstoff mit nahezu reinem Sauerstoff umgesetzt wird, sodass das Verbrennungsabgas keinen Stickstoff enthält und quasi vollständig aus CO₂ und Wasser besteht.

Die WO 2008/059378 beschreibt ein solches Verfahren, wobei das Abgas des Calcinators im Hinblick auf den CO₂-Gehalt soweit aufkonzentriert wird, dass es einer Speicherung zugeführt werden kann. Auf diese Weise können etwa 75% des Kohlendioxids, das beim Klinkerbrennen generiert wird, abgeschieden werden, ohne dass nennenswerte Abänderungen des Klinkerherstellungsprozesses erforderlich sind. Als Calcinatoren werden, wie auch in der WO 2008/059378, üblicherweise sogenannte Flugstrom-Calcinatoren verwendet, bei denen das zu behandelnde Rohmehl durch ein Trägergas (üblicherweise das Abgas des Ofens oder Tertiärluft) durch den Calcinator transportiert wird, währenddessen die Wärmebehandlung stattfindet. Wird der Calcinator jedoch nicht mehr mit dem Ofenabgas bzw. der Tertiärluft des Kühlers, sondern mit Sauerstoff betrieben, ergibt sich eine stark reduzierte Abgasmenge. In der WO 2008/059378 wird diese Problematik dadurch gelöst, dass die Trägergasmenge durch eine Rückführung der Abgase des Calcinators angehoben wird. Wegen der hohen Gastemperaturen des rezirkulierten Abgases ist es für den Betrieb einer Strömungsmaschine (Ventilator) erforderlich, dass das Gas mittels Wärmetauscher abgekühlt oder mit einem Gas niedrigerer Temperatur gequenscht wird, wie das in der WO 2008/059378 vorgeschlagen wird. Durch diese Rezirkulation eines Teils der Abgase des Calcinators können zudem lokale Überhitzungen im mit Sauerstoff betriebenen Calcinator vermieden werden.

Die Rezirkulation hat jedoch den Nachteil der Recarbonatisierung, d. h. die Rückbildung von CaCO₃ aus CaO und CO₂. Aufgrund des beim Oxyfuel-Prozesses hohen CO₂-Partialdruckes erfolgt die Recarbonatisierung mit hoher Reaktionsgeschwindigkeit, wenn eine Abkühlung des Brenngutes auf Temperaturen unterhalb der Gleichgewichtstemperatur von etwa 850 °C erfolgt. Für den Prozess resultiert dieser Vorgang in einem erhöhten Wärmeenergiebedarf für den Calcinator, da das recarbonatisierte Material erneut entsäuert werden muss.

Der Erfindung liegt daher die Aufgabe zugrunde, das Verfahren und die Anlage zur Herstellung von Zementklinker bei einer Anwendung des Oxyfuel-Prozesses im Calcinator anzugeben, wobei sich das Verfahren bzw. die Anlage durch einen geringeren Energiebedarf auszeichnet..

Erfindungsgemäß wird diese Aufgabe durch die Merkmale der Ansprüche 1 und 9 gelöst.

Beim erfindungsgemäßen Verfahren zur Herstellung von Zementklinker wird Zementrohmehl in einem Vorwärmer vorgewärmt, das vorgewärmte Zementrohmehl in einem Calcinator vorcalciniert und das vorcalcinierte Zementrohmehl in einem Ofen gebrannt, wobei im Calcinator Brennstoff und Verbrennungsluft mit einem Sauerstoffgehalt von wenigstens 75 mol% eingesetzt wird und das Zementrohmehl in einer Wirbelschicht im Calcinator vorcalciniert wird. Die im Ofen entstehenden Abgase werden unter Umgehung des Calcinators dem Vorwärmer und die Abgase des Calcinators einer CO₂-Aufbereitungseinrichtung zugeführt.

Die erfindungsgemäße Anlage ist durch Durchführung des obigen Verfahrens ausgebildet.

Man hat zwar schon früher überlegt, Calcinatoren als Wirbelschichtreaktoren auszubilden, jedoch hat diese Art von Calcinator in der Praxis keine Bedeutung erlangt, da man die Calcinatoren aufgrund der benötigten Verbrennungsluftmenge so groß hätte dimensionieren müssen, dass eine wirtschaftliche Vorcalcinierung nicht möglich war.

Die Kombination des Oxyfuel-Prozesses mit einem als Wirbelschichtreaktor ausgebildeten Calcinator ermöglicht nun aber eine ideale, sich gegenseitig ergänzende Kombination zweier an sich bekannter Maßnahmen. Durch die Verwendung von Verbrennungsluft mit einem hohen Sauerstoffgehalt von wenigstens 75% (vorzugsweise wenigstens 90%) reduziert sich die für die Verbrennung erforderliche Gasmenge erheblich. Dadurch kann der Wirbelschichtreaktor um den Faktor 4 bis 5 kleiner konstruiert werden, als ein mit herkömmlicher Verbrennungsluft betriebener Wirbelschichtreaktor. Der Wirbelschichtreaktor hat außerdem den Vorteil, dass er gegenüber einem FlugstromReaktor mit einer erheblich geringeren Trägergasmenge arbeiten kann. Es ist sogar so, dass die für die Verbrennung im Wirbelschichtreaktor erforderliche Verbrennungsluft gleichzeitig auch für den Aufbau der Wirbelschicht ausreicht. Eine Rezirkulation des Abgases des Calcinators wird daher gar nicht bzw. nur in sehr geringem Umfang erforderlich sein.

Durch die erfindungsgemäße Kombination kann daher die Problematik der Recarbonatisierung vermieden werden. Der Wirbelschichtreaktor hat zudem den Vorteil, dass er eine äußerst gleichmäßige Temperaturverteilung aufweist, sodass auch ohne Rezirkulation der Abgase lokale Temperaturspitzen im Calcinator vermieden werden können.

Weitere Ausgestaltungen der Erfindung sind Gegenstand der Unteransprüche.

Gemäß einer bevorzugten Ausgestaltung der Erfindung weist der Calcinator Mittel zum Abführen des vorcalcinierten Zementrohmehls auf, die unterhalb des Expansionspunktes der Wirbelschicht angeordnet sind und mit dem Ofen in Verbindung stehen. Dabei wird die Wirbelschicht vorzugsweise so betrieben, dass sie sich in einem stationären und nicht in einem zirkulierenden Zustand befindet, d.h. die Durchströmung des Wirbelschichtreaktors erfolgt mit Geschwindigkeiten, die deutlich unterhalb der Austragsgeschwindigkeit Für das vorcalcinierte Zementrohmehl liegen. Der dennoch im Abgas der Wirbelschicht enthaltene Staub wird in einem Abscheider aus dem Gas abgetrennt und der Wirbelschicht wieder zugeführt.

Im Vergleich zur WO 2008/059378 wird durch den Einsatz eines Wirbelschichtreaktors, insbesondere durch eine stationär betriebene Wirbelschicht eine Rezirkulation des Abgases überflüssig. Daher ist ein Abkühlen und erneutes Aufheizen des Abgases nicht mehr notwendig. Es wird somit deutlich weniger Staub im Kreis geführt und dieser Staub wird nicht, oder nur geringfügig abgekühlt, sodass im Vergleich deutlich weniger CaO recarbonatisieren kann.

Gemäß einer besonderen Ausgestaltung des Calcinators können die Mittel zum Abführen des vorcalcinierten Zementrohmehls siphonartig ausgebildet werden.

Der Wirbelschichtreaktor selbst weist vorzugsweise einen porösen oder perforierten Anströmboden auf, an den die Mittel zum Zuführen von Verbrennungsluft zur Begasung des Anströmbodens angeschlossen sind. Der poröse Anströmboden kann dabei auch durch eine Schüttgutschichtgebildet werden, die durch geeignete Mittel zu- bzw. abgeführt werden kann, um die Schüttgutschicht auszutauschen bzw. zu regenerieren.

Der im Abgas des Calcinators enthaltene Staub wird in einem mit dem Calcinator in Verbindung stehenden Abscheider abgeschieden und ggf. der Wirbelschicht wieder zugeführt. Um den Abscheidegrad des Abscheider zu verbessern und/oder um die Gefahr von Verstopfungen zu reduzieren, kann das Abgas des Calcinators optional direkt mit Rohmehl oder mittels Wärmetauscher gekühlt werden. Die Gefahr einer Zyklonverstopfung ist aufgrund der hohen Gas- und Materialtemperaturen nahe am Schmelzpunkt der Alkalisalze bei der Calcination in nahezu reiner CO₂ Atmosphäre besonders gegeben.

Das Abgas des Calcinators wird nach Abscheidung des Staubes und einer ggf. erforderlichen Entfeuchtung einer CO₂-Aufbereitungseinrichtung, insbesondere einer Einrichtung zur Verflüssigung, zugeführt.

Das durch den Vorwärmer geleitete Ofenabgas enthält möglicherweise einen erhöhten Gehalt an SO₂, da der im Ofen ausgetriebene Schwefel bzw. der über den Ofen-Brennstoff eingebrachte Brennstoffschwefel nicht mehr im Calcinator in das Material eingebunden werden kann. Das Ofenabgas wird daher zweckmäßigerweise einer Vorrichtung zur Abscheidung von SO₂ zugeführt. Weiterhin kann dieses Ofenabgas einer CO₂-Wäsche und einer anschließenden Desorption ausgesetzt werden, bevor es ebenfalls einer Einrichtung zur CO₂-Verflüssigung zugeführt wird. Dabei ist es auch denkbar, dass das einer CO₂-Wäsche und einer Desorption ausgesetzte Ofenabgas vor der CO₂-Verflüssigung mit dem Calcinatorabgas vermischt wird.

Weitere Vorteile und Ausgestaltungen der Erfindung werden im Folgenden anhand der Beschreibung und der Zeichnung näher erläutert.

In der Zeichnung zeigen
- Fig. 1: ein Blockschaltbild einer Anlage zur Herstellung von Zementklinker gemäß einem ersten Ausführungsbeispiel,
- Fig. 2: ein Blockschaltbild einer Anlage zur Herstellung von Zementklinker gemäß einem zweiten Ausführungsbeispiel,
- Fig. 3: eine schematische Darstellung des Calcinators gemäß einer ersten Variante,
- Fig. 4: eine schematische Darstellung des Calcinators gemäß einer zweiten Variante und
- Fig. 5: ein Blockschaltbild einer Anlage zur Herstellung von Zementklinker gemäß einem dritten Ausführungsbeispiel.

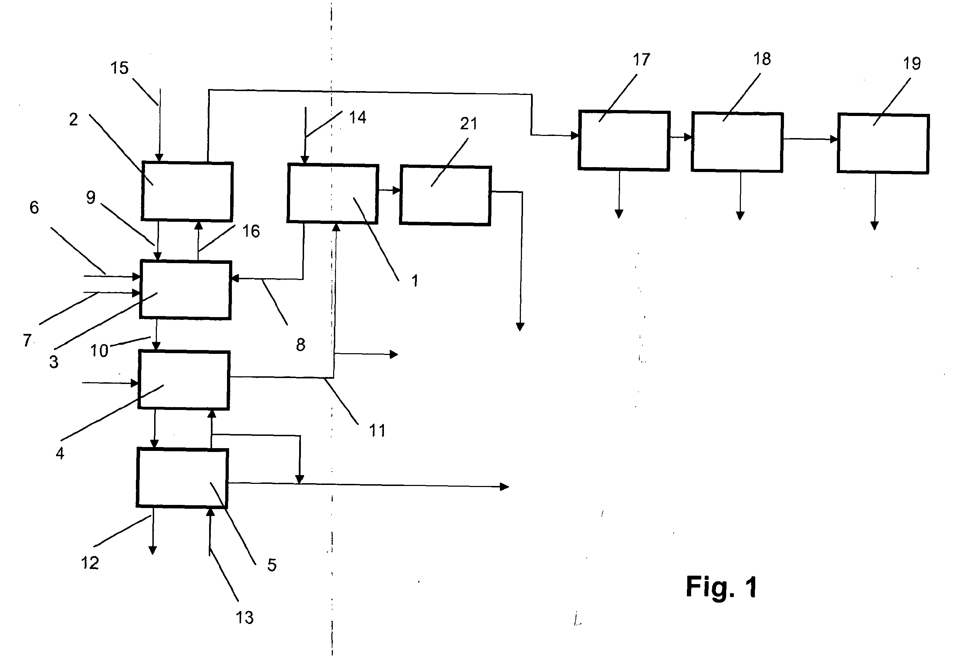

Die in Fig. 1 dargestellte Anlage zur Herstellung von Zementklinker besteht im Wesentlichen aus einem ersten Vorwärmer 1, einem zweiten Vorwärmer 2, einem Calcinator 3 sowie einem Ofen 4. Weiterhin ist ein Kühler 5 vorgesehen.

Der Calcinator weist Mittel 6 zum Zuführen von Brennstoff und Mittel 7 zum Zuführen von Verbrennungsluft mit einem Sauerstoffgehalt von wenigstens 75 mol%, vorzugsweise wenigstens 90 mol% sowie Mittel 8, 9 zum Zuführen von vorgewärmten Zementrohmehl aus den Vorwärmern 1, 2 auf.

Das vorcalcinierte Zementrohmehl gelangt über eine Leitung 10 in den Ofen zum Brennen des vorcalcinierten Zementrohmehls. Das Abgas des Ofens wird über eine Ofenabgasleitung 11 unter Umgehung des Calcinators 3 in den ersten Vorwärmer 1 geleitet.

Der im Ofen gebrannte Zementklinker wird im nachfolgenden Kühler 5 gekühlt und als Fertiggut 12 abgeführt. Die im Kühler verwendete Kühlluft 13 wird teilweise im Ofen als Verbrennungsluft oder für eine sonstige Wärmeververtung eingesetzt.

Den beiden Vorwärmern 1, 2 wird Zementrohmehl 14, 15 zugeführt, welches nach erfolgter Vorwärmung über die Mittel 8 und 9 den Calcinator 3 zugeführt wird. Während das Abgas des Ofens 4 lediglich im ersten Vorwärmer genutzt wird gelangen die Abgase des Calcinators 3 über eine Calcinatorabgasleitung 16 in den zweiten Vorwärmer 2. Die Abgase des Calcinators werden somit nicht mit den Ofenabgasen vermischt.

Der Calcinator 3 arbeitet nach dem Wirbelschichtprinzip und erhält kein Ofenabgas, sondern wird vielmehr mit Brennstoff und einem gegenüber Umgebungsluft angereicherten Sauerstoffstrom beaufschlagt. In der Regel beträgt die Sauerstoffkonzentration wenigstens 75 mol%, vorzugsweise wenigstens 90 mol%. Beim Wirbelschichtprinzip ist im Vergleich zum Flugstromreaktor ein deutlich geringerer Volumenstrom notwendig, da das Rohmehl nur fluidisiert, aber nicht pneumatisch gefördert werden muss. Eine Rückführung der Calcinatorabgase ist daher nicht erforderlich. In der Wirbelschicht stellen sich selbst bei sehr niedrigen Strömungsgeschwindigkeiten Feststorfkonzentrationen von bis zu 200 kg/m³ ein.

Das Calcinatorabgas wird nach dem Vorwärmer 2 einem Abscheider 17 zur Entstaubung und einer Einrichtung zur Entfeuchtung 18 zugeführt, bevor es in eine C02-Aufbereitungseinrichtung 19, insbesondere einer Verflüssigungseinrichtung, gelangt. Nach Entstaubung und Entfeuchtung enthält das Abgas mehr als 90% Kohlendioxid und kann nach eventuell notwendiger Abscheidung von Spurenstoffen, wie z. B. SO₂, gelagert werden.

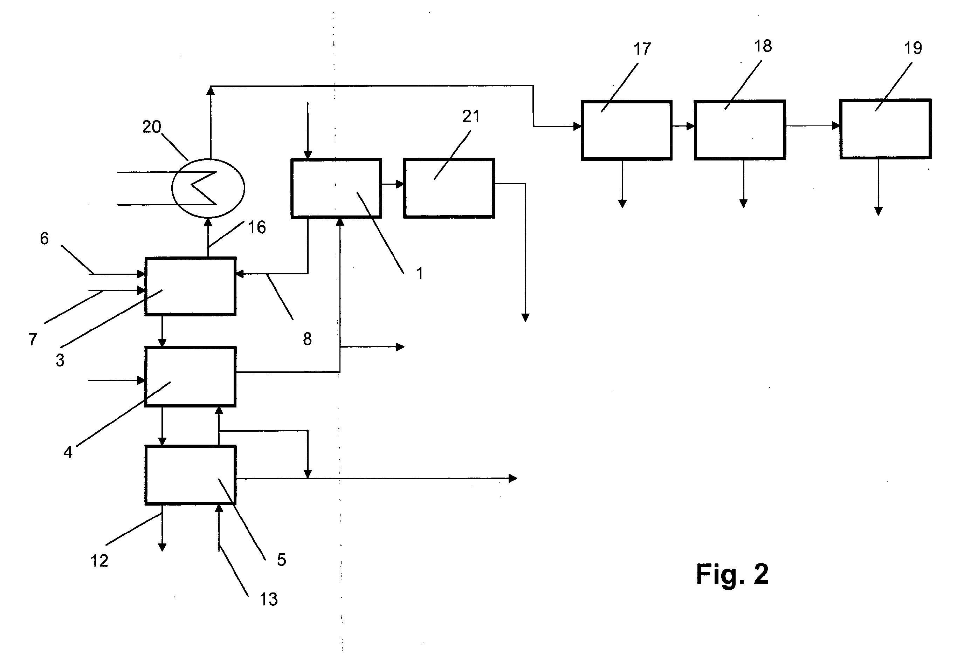

Beim zweiten Ausführungsbeispiel gemäß Fig. 2 ist anstelle des zweiten Vorwärmers ein Wärmetauscher 20 zur Abkühlung des Calcinatorabgases vorgesehen. Ansonsten werden auch hier die Abgase des Ofens 4 unter Umgehung des Calcinators 3 dem Vorwärmer 1 zugeführt.

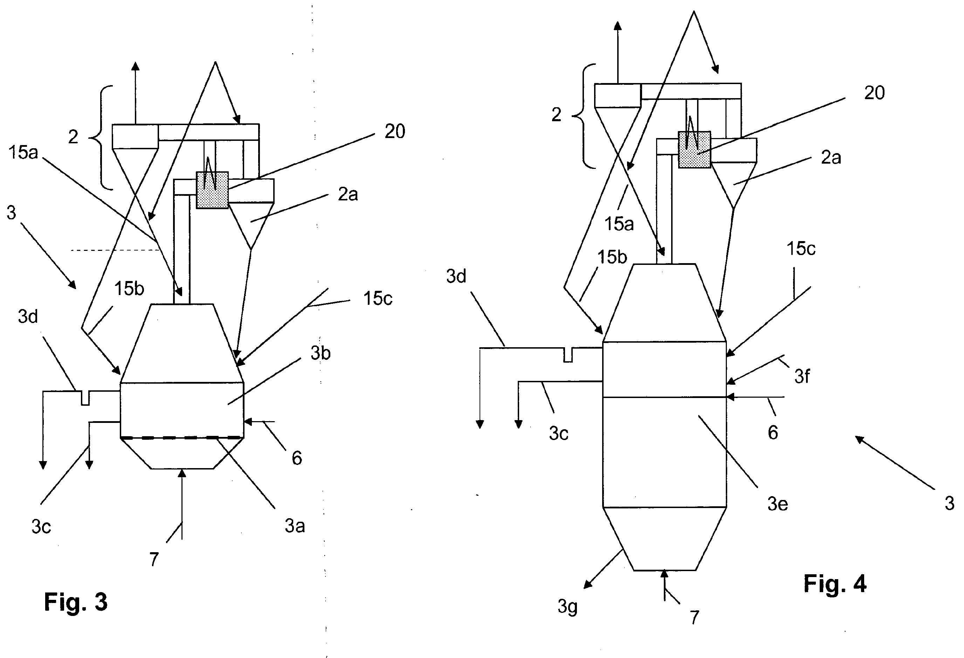

Im Folgenden wird anhand von Fig. 3 der Calcinator 3 näher beschrieben. Er ist als Wirbelschichtreaktor mit einem porösen oder perforierten Anströmboden 3a ausgebildet, wobei die Fluidisierung der Wirbelschicht aus vorgewärmtem Zementrohmehl mit der Verbrennungsluft über die Mittel 7 zum Zuführen der Verbrennungsluft erfolgt. Die Brennstoffzufuhr über die Mittel 6 geschieht in die heiße, fluidisierte Wirbelschicht 3b, wo die Verbrennung mit der sauerstoffhaltigen Verbrennungsluft stattfindet. Das mittels freigesetzter Wärmeenergie entsäuerte Zementrohmehl wird aus der Wirbelschicht 3b im Unter- oder Überlauf 3c, 3d abtransportiert und in den Ofen 4 eingeleitet. Die Mittel zum Abführen des vorcalcinierten Zementrohmehls können dabei siphonartig ausgebildet sein. Die Wirbelschicht 3b wird vorzugsweise so betrieben, dass sie sich in einem stationären und nicht in einem zirkulierenden Zustand befindet, d.h. die Durchströmung des Wirbelschichtreaktors erfolgt mit Geschwindigkeiten, die deutlich unterhalb der Austragsgeschwindigkeit für das vorcalcinierte Zementrohmehl liegen. Der dennoch im Abgas der Wirbelschicht enthaltene Staub wird in einem Zyklon 2a des folgenden Vorwärmers 2 abgeschieden und der Wirbelschicht wieder zugeführt. Um den Abscheidegrad des Zyklons 2a zu verbessern und/oder um die Gefahr von Zyklonverstopfungen zu reduzieren, kann das Calcinatorabgas der Wirbelschicht optional direkt mit Rohmehl 15a aus dem Vorwärmer 2 oder mittels einem Wärmetauscher 20 gekühlt werden. Der Wirbelschicht wird außerdem das vorgewärmte Rohmehl 15b, 15c aus dem bzw. aus beiden Wärmetauschern zugeführt und dort nahe zu vollständig entsäuert.

Fig. 4 zeigt eine Variante des Calcinators 3, bei welcher der Anströmboden durch eine Schüttgutschicht 3e, vorzugsweise aus zerkleinertem Zementklinker, gebildet wird. Ansonsten ist die Funktionsweise mit dem in Fig. 3 beschriebenen Ausführungsbeispiel identisch. Es sind lediglich Mittel 3f und 3g zum Zu- bzw. Abführen der Schüttgutschicht 3e zum Zwecke des Austausches bzw. der Regeneration der Schüttgutschicht vorgesehen.

Wenngleich die beiden Calcinatoren in Kombination mit dem zweiten Vorwärmer 2 dargestellt sind, kann anstelle des Vorwärmers aber auch lediglich ein Wärmetauscher vorgesehen werden, wie er beispielsweise im Fig. 2 dargestellt ist.

Die Ofenabgase werden nach dem Vorwärmer 1 üblicherweise einem Abscheider 21 zur Entstaubung zugeführt. Da das Ofenabgas nicht mehr durch den Calcinator 3 geleitet wird, ist mit einer deutlich verringerten Schwefeleinbindung in den Zementklinker und infolge mit deutlich höheren SO₂-Emission zu rechnen.

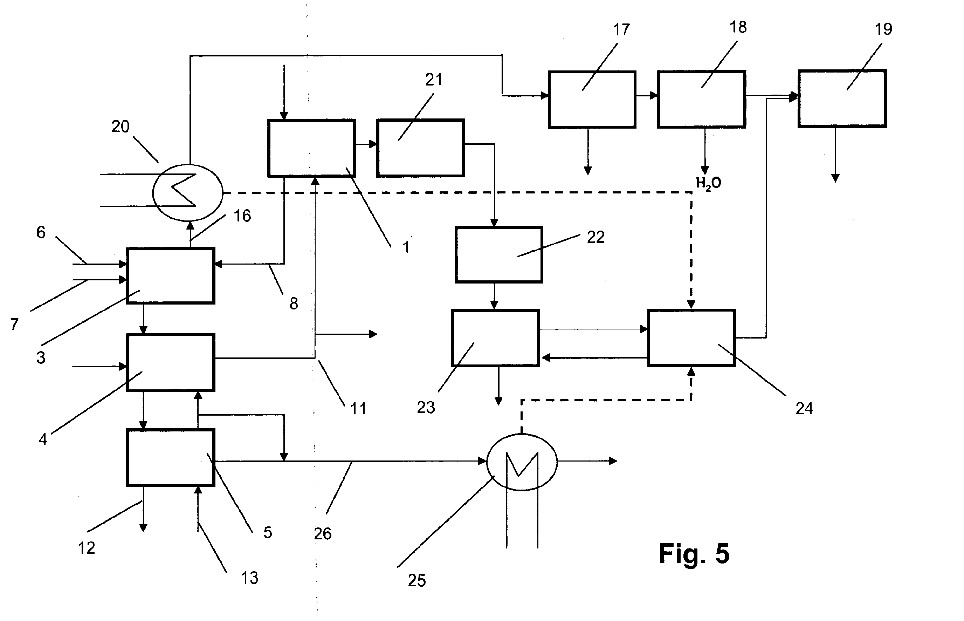

Das Ausführungsbeispiel gemäß Fig. 5 zeigt daher eine Möglichkeit auf, bei der das Ofenabgas sowohl hinsichtlich des SO₂ als auch hinsichtlich des CO₂-Gehalts weiterbehandelt wird. So ist nach dem Abscheider 21 eine Vorrichtung 22 zur Abscheidung von SO₂ vorgesehen.

Um die CO₂-Abscheidung weiter zu verbessern, kann danach in einer Einrichtung 23 eine CO₂-Wäsche und anschließend in einer Einrichtung 24 eine Desorption vorgesehen werden. Als geeignetes Absorptionsmittel kommt beispielsweise Monoethanolamin in Betracht. Für die notwendige Regeneration des Absorptionsmittels kann vorteilhafterweise die Wärme des Wärmetauschers 20 und / oder eines Wärmetauschers 25, der Wärme aus dem Kühlerabluftstrom 26 nutzbar macht, eingesetzt werden. Anschließend kann das verbleibende CO₂-haltige Gas ebenfalls einer Verflüssigung zugeführt werden, wobei es vorteilhafterweise zuvor mit dem entfeuchteten Calcinatorabgas vereinigt wird, wie in Fig. 5 dargestellt ist.

Das aufbereitete, insbesondere verflüssigte CO₂ kann dann in geeigneter Weise gelagert oder in sonstiger Weise genutzt werden. Mit der oben beschriebenen Anlage ist eine CO₂-Konzentration mit einer Reinheit von mehr als 95% zu erreichen, sodass der Transport und die Lagerung wirtschaftlich durchgeführt werden können.

## Patentansprüche

1. Verfahren zur Herstellung von Zementklinker, wobei Zementrohmehl in einem Vorwärmer (1, 2) vorgewärmt, das vorgewärmte Zementrohmehl in einem Calcinator (3) vorcalciniert und das vorcalcinierte Zementrohmehl in einem Ofen (4) gebrannt wird, wobei im Calcinator (3) Brennstoff und Verbrennungsluft mit einem Sauerstoffgehalt von wenigstens 75 mol% eingesetzt wird, und die im Ofen entstehenden Abgase unter Umgehung des Calcinators (3) dem Vorwärmer (1) und die Abgase des Calcinators einer CO₂-Aufbereitungseinrichtung zugeführt werden,
**dadurch gekennzeichnet, dass** das Zementrohmehl in einer Wirbelschicht im Calcinator (3) vorcalciniert wird.

2. Verfahren nach Anspruch 1, **dadurch gekennzeichnet, dass** die Wirbelschicht im stationären Zustand betreiben wird.

3. Verfahren nach Anspruch 1, **dadurch gekennzeichnet, dass** das vörcalcinierte Rohmehl unterhalb des Expansionspunktes der sich ausbildenden Wirbelschicht abgezogen und dem Ofen (4) zugeführt wird.

4. Verfahren nach Anspruch 1, **dadurch gekennzeichnet, dass** die für die Erzeugung der Wirbelschicht erforderliche Begasung durch die Verbrennungsluft gebildet wird.

5. Verfahren nach Anspruch 1, **dadurch gekennzeichnet, dass** die Abgase des Calcinators einer Verflüssigung unterzogen werden.

6. Verfahren nach Anspruch 1, **dadurch gekennzeichnet, dass** das durch den Vorwärmer (1) geleitete Ofenabgas einer CO₂-Wäsche (23) und das mit CO₂-angereicherte Waschmittel einer anschließenden Desorption ausgesetzt wird, bevor das aus dem Ofen stammende CO₂ ebenfalls einer CO₂-Verflüssigung zugeführt wird.

7. Verfahren nach Anspruch 6, **dadurch gekennzeichnet, dass** der durch eine CO₂-Wäsche (23) und eine Desorption gewonnene CO₂-Strom des Ofenabgases vor der CO₂-Verflüssigung mit dem Cacinatorabgas vermischt wird.

8. Verfahren nach Anspruch 1, **dadurch gekennzeichnet, dass** das durch den Vorwärmer (1) geleitete Ofenabgas einer Vorrichtung (22) zur Abscheidung von SO₂ zugeführt wird.

9. Anlage zur Durchführung des Verfahrens nach einem oder mehreren der vorhergehenden Ansprüche mit
a. einem Vorwärmer (1, 2) zum Vorwärmen von Zementrohmehl,
b. wenigstens einem als Wirbelschichtreaktor ausgebildeten Calcinator (3) zum Vorcalcinieren des vorgewärmten Zementrohmehls mit Mittel (6) zum Zuführen von Brennstoff und Mittel (7) zum Zuführen von Verbrennungsluft mit einem Sauerstoffgehalt von wenigstens 75 mol% sowie Mitteln (8, 9) zum Zuführen des vorgewärmten Zementrohmehls, wobei der Calcinator mit einer CO₂-Aufbereitungseinrichtung zur Zuführung der Abgase des Calcinators in Verbindung steht, und
c. einem Ofen (4) zum Brennen des vorcalcinierten Zementrohmehls, der eine Ofenabgasleitung (11) aufweist, die unter Umgehung des Calcinators mit dem Vorwärmer (1) verbunden ist.

10. Anlage nach Anspruch 9, **dadurch gekennzeichnet, dass** die CO₂-Aufbereitungseinrichtung eine Einrichtung zur CO₂-Verflüssigung umfasst.

11. Anlage nach Anspruch 9, **dadurch gekennzeichnet, dass** der Calcinator (3) Mittel (3c) zum Abführen des vorcalcinierten Zementrohmehls aufweist, die unterhalb des Expansionspunktes der Wirbelschicht angeordnet sind und mit dem Ofen (4) in Verbindung stehen.

12. Anlage nach Anspruch 9, **dadurch gekennzeichnet, dass** der Calcinator (3) einen porösen oder perforierten Anströmboden (3a) aufweist, an den die Mittel zum Zuführen von Verbrennungsluft zur Begasung des Anströmbodens angeschlossen sind.

13. Anlage nach Anspruch 12, **dadurch gekennzeichnet, dass** der poröse Anströmboden durch eine Schüttgutschicht (3e) gebildet wird.

14. Anlage nach Anspruch 9, **dadurch gekennzeichnet, dass** der Calcinator (3) mit wenigstens einem Abscheider (17, 2a) zur Entstaubung in Verbindung steht.

15. Anlage nach Anspruch 14, **dadurch gekennzeichnet, dass** zwischen dem Calcinator (3) und dem wenigstens einen Abscheider Kühler ein (17,2a) zum Kühlen des Calcinatorabgases vorgesehen ist.

## Claims

1. Method for producing cement clinker, raw cement meal being preheated in a preheater (1,2), the preheated raw cement meal being precalcined in a calciner (3) and the precalcined raw cement meal being burnt in a kiln (4), fuel and combustion air having an oxygen content of at least 75 mol% being used in the calciner (3), and the exhaust gases occurring in the kiln being delivered to the preheater (1), bypassing the calciner (3), and the exhaust gases of the calciner being delivered to a CO₂ preparation device,
**characterised in that** the raw cement meal is precalcined in a fluidised bed in the calciner (3).

2. Method according to claim 1, **characterised in that** the fluidised bed is operated in the stationary state.

3. Method according to claim 1, **characterised in that** the precalcined raw meal is drawn off below the expansion point of the developing fluidised bed and is delivered to the kiln (4) .

4. Method according to claim 1, **characterised in that** the gassing necessary to produce the fluidised bed is formed by the combustion air.

5. Method according to claim 1, **characterised in that** the exhaust gases of the calciner are subjected to liquefaction.

6. Method according to claim 1, **characterised in that** the kiln exhaust gas conveyed through the preheater (1) is subjected to CO₂ washing (23) and the CO₂-enriched washing agent is subjected to subsequent desorption before the CO₂ coming from the kiln is likewise delivered to a CO₂ liquefaction stage.

7. Method according to claim 6, **characterised in that** the CO₂ stream of the kiln exhaust gas, which stream is obtained by CO₂ washing (23) and desorption, is mixed with the calciner exhaust gas prior to the CO₂ liquefaction.

8. Method according to claim 1, **characterised in that** the kiln exhaust gas conveyed through the preheater (1) is delivered to a device (22) for separating off SO₂.

9. System for performing the method according to one or more of the preceding claims, having
a. a preheater (1, 2) for preheating raw cement meal,
b. at least one calciner (3) in the form of a fluidised bed reactor for precalcining the preheated raw cement meal, having means (6) for delivering fuel and means (7) for delivering combustion air having an oxygen content of at least 75 mol% and also means (8, 9) for delivering the preheated raw cement meal, the calciner being connected to a CO₂ preparation device for delivering the exhaust gases of the calciner, and
c. a kiln (4) for burning the precalcined raw cement meal, which kiln has a kiln exhaust gas duct (11) which is connected to the preheater (1), bypassing the calciner.

10. System according to claim 9, **characterised in that** the CO₂ preparation device comprises a device for CO₂ liquefaction.

11. System according to claim 9, **characterised in that** the calciner (3) has means (3c) for removing the precalcined raw cement meal which are arranged below the expansion point of the fluidised bed and are connected to the kiln (4).

12. System according to claim 9, **characterised in that** the calciner (3) has a porous or perforated inflow base (3a) to which the means for delivering combustion air for gassing the inflow base are connected.

13. System according to claim 12, **characterised in that** the porous inflow base is formed by a bulk material layer (3e).

14. System according to claim 9, **characterised in that** the calciner (3) is connected to at least one separator (17, 2a) for dust removal.

15. System according to claim 14, **characterised in that** a cooler for cooling the calciner exhaust gas is provided between the calciner (3) and the at least one separator (17, 2a) .

## Revendications

1. Procédé de fabrication de clinker de ciment, sachant que la farine de ciment crue est préchauffée dans un préchauffeur (1, 2), que la farine de ciment crue préchauffée est précalcinée dans un calcinateur (3) et que la farine de ciment crue précalcinée est cuite dans un four (4), sachant que, dans le calcinateur (3), sont mis en oeuvre un combustible et de l'air de combustion présentant une teneur en oxygène d'au moins 75 mol %, et que les gaz d'échappement, générés dans le four, sont conduits au préchauffeur (1), en contournant le calcinateur (3), et que les gaz d'échappement du calcinateur sont conduits à une installation de traitement de CO₂, **caractérisé en ce que** la farine de ciment crue est précalcinée, dans le calcinateur (3), dans un lit fluidisé tourbillonnant.

2. Procédé selon la revendication 1, **caractérisé en ce que** le lit fluidisé tourbillonnant est exploité à l'état stationnaire.

3. Procédé selon la revendication 1, **caractérisé en ce que** la farine de ciment crue, précalcinée est extraite au-dessous du point d'expansion du lit fluidisé tourbillonnant, qui se forme, et est conduite au four (4).

4. Procédé selon la revendication 1, **caractérisée en ce que** les gaz, nécessaires pour générer le lit fluidisé tourbillonnant, sont formés par l'air de combustion

5. Procédé selon la revendication 1, **caractérisé en ce que** les gaz d'échappement du calcinateur sont soumis à une fluidification.

6. Procédé selon la revendication 1, **caractérisé en ce que** les gaz d'échappement du four, qui traversent le préchauffeur (1), sont soumis à un lavage par CO² (23) et que le produit de lavage enrichi de CO² est soumise ensuite à une désorption, avant que le CO², en provenance du four, soit aussi soumis à une fluidification.

7. Procédé selon la revendication 1, **caractérisé en ce que** le flux de CO² de gaz d'échappement du four, obtenu par un lavage par CO² (23) et une désorption, est mélangé avec le gaz d'échappement du calcinateur, avant la fluidification du CO².

8. Procédé selon la revendication 1, **caractérisé en ce que** le gaz d'échappement du four, conduit à travers le préchauffeur (1), est conduit à un dispositif (22) pour l'élimination du CO².

9. Installation pour l'exécution du procédé selon l'une ou plusieurs des revendications précédentes, comprenant :
a. un préchauffeur (1, 2) pour le préchauffage de farine de ciment crue,
b. au moins un calcinateur (3) réalisé sous la forme d'un réacteur à lit fluidisé tourbillonnant, pour la précalcination de la farine de ciment crue, préchauffée, et doté de moyens (6) pour l'amenée du combustible et des moyens (7) pour l'amenée d'air de combustion présentant une teneur d'oxygène d'au moins 75 mol %, ainsi que de moyens (8, 9) pour l'amené de la farine de ciment crue préchauffée, sachant que le calcinateur est en communication avec une installation de traitement de CO² pour la conduite des gaz d'échappement du calcinateur, et
c. un four (4) pour la cuisson de la farine de ciment crue précalcinée, lequel est doté d'une conduite de gaz d'échappement du four (11), qui est reliée au préchauffeur (1), en contournant le calcinateur.

10. Installation selon la revendication 9, **caractérisée en ce que** l'installation de traitement de CO² est dotée d'une installation de fluidification de CO² .

11. Installation selon la revendication 9, **caractérisée en ce que** le calcinateur (3) est doté de moyens (3c) pour évacuer la farine de ciment crue précalcinée, qui sont disposés au-dessous du point d'expansion du lit fluidisé tourbillonnant et sont en communication avec le four (4).

12. Installation selon la revendication 9, **caractérisée en ce que** le calcinateur (3) est doté d'un fond de soufflage (3a) poreux, auquel les moyens d'amenée d'air de combustion sont raccordés pour l'introduction de gaz.

13. Installation selon la revendication 12, **caractérisée en ce que** le fond de soufflage poreux est formé par une couche de produit en vrac (3e).

14. Installation selon la revendication 9, **caractérisée en ce que** le calcinateur (3) est en communication avec au moins un séparateur (17, 2a) pour le dépoussiérage.

15. Installation selon la revendication 14, **caractérisée en ce que**, entre le calcinateur (3) et le séparateur (17, 2a) au moins prévu, un refroidisseur est prévu pour le refroidissement du gaz d'échappement du calcinateur.
